# EUROPEAN PATENT APPLICATION

(11) **EP 0 882 815 A1**
(43) Date of publication of application: **09.12.1998**
(21) Application number: 97933932.2
(22) Date of filing: 18.07.1997
(51) Int. Cl.: C25B 9/00, C02F 1/461

(54) **ELECTROCHEMICAL PLANT**

(30) Priority: 27.11.1996 RU 96122382
(71) Applicant: Western Pacific Company, Inc. Ltd., Moscow, 127247 (RU)
(72) Inventor: NAIDA, Nikolai Nikolaevich, Moscow, 105275 (RU); PUSHNYAKOV, Nikolai Karpovich, St.Petersburg, 193076 (RU)
(74) Representative: Johnstone, Douglas Ian
(86) International application number: RU9700227
(87) International publication number: WO9823793

(57) **Abstract**

The invention relates to the field of electrochemical processing of aqueous solutions and the production of gases. Disclosed is an electrochemical plant with channels for collecting and distributing anolytes and catholytes. The increased efficiency of the electrochemical plant is due to the presence of anode and cathode compartments, built in the shape of parrallelograms and containing, in their upper and lower corners, canals which serve as connections to the collecting and distributing channels respectively. These canals partially compress and expand the electrolyte flow, thereby conferring on it a new property which consists in a more even distribution of the electrolytes over the entire volume of the compartment. Once electrochemically processed, the solutions and gases enter the canals that partially compress and expand the flow, and continue towards the collecting channels of anolyte and catholyte respectively.

## Description

The invention falls into the field of electrochemical processing of water solutions and gas production.

It is known an electrolyzer, where distribution of electrolyte and electrolysis products is realized through the channels within the plane parallel to that of the electrodes [1]. The disadvantage of this electrolyzer is considerably large hydrodynamic resistance of input openings of the channels, so as difficult removal of the gases obtained by electrochemical processing. It is known an electrolyzer where distribution of electrolyte and electrolysis products is realized through collectors within the plane perpendicular to that of the electrodes [2]. The disadvantage of this electrolyzer is the placement of electrolyte channels conducting electrolyte to the electrolyzer chambers within the electrodes, improving metal consumption of electrolyzer and considerably reducing effectiveness of the electrolysis. Also exists an electrolysis plant where electrolyte is conducted to and from the chamber by collectors placed within the plane perpendicular to that of the electrodes, while input and output channels of collectors are located out of electrodes [3]. The disadvantage of the plant is an uniniform distribution and supply of electrolyte to the chambers of the electrochemical plant, low turbulation of electrolytes leaving the channels and difficult gas removal from the chambers.

The problem to be resolved by the present invention is to improve the effectiveness of electrochemical plant.

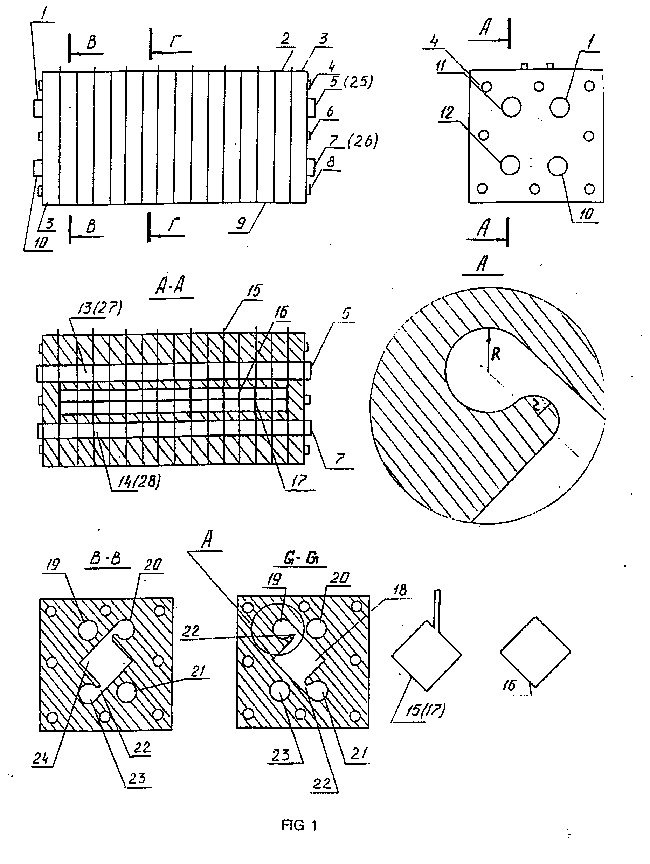

Technical result which could be obtained if the invention has been realized is to get more uniform distribution of electrolyte solutions in the chambers, reduce risk of "stagnation" zones formation in the chambers under consumption of great amount of electrolyte, effectively remove the products of electrochemical and chemical reactions from the chambers. In order to achieve the mentioned technical result an electrochemical plant (Fig. 1) has been constructed as a pack of anode and cathode cells with parallelogram chambers and diaphragms located between the cells. Gathering and distribution collectors for anolyte and catholyte respectively are placed in the upper and lower parts of the plant within the planes perpendicular to that of the electrodes. The collectors are connected with the chambers of the plant by channels in the corners of the upper and lower parts of the chambers, providing for the right - up - left electrolyte flow in the anode chambers, and left - up - right electrolyte flow in the cathode chambers. The form of the channels allows for incomplete compression and expansion of the electrolyte flow entering the chamber and leaving it. Introducing anode and cathode parallelogram chambers and the channels connecting the chambers with the gathering and distribution collectors, the form of which allows incomplete compression and expansion of the electrolyte flow, into the plant permits to obtain a new characteristics, i.e. more uniform electrolyte distribution in the chambers and efficient removal of electrochemical and chemical reactions' products from the chambers. The incomplete compression in the channels improves the opening consumption rate, taking into account the losses of pressure, degree of the flow compression, speed and consumption of the liquid [4, 5]. The improvement of the opening consumption rate leads to improved speed and electrolyte consumption. The expansion in the channel provides for more uniform distribution of the electrolytes in the chambers, so as for more efficient removal of the electrolytes from the collectors to the chambers of the plant, and from the chambers of the plant to the collectors. The parallelogram shape of the chambers allows placing gathering and distribution collectors within the cells of the electrochemical plant more functionally, so as to reduce hydrodynamic expenditures in the chambers.

At the Fig. 1 an electrochemical plant is presented: 1 - plug; 2 - cathode cells; 3 - pressing cells; 4 - bracing bolts (bracers); 5 - output anolyte pipe; 6 - bracers; 7 - plug; 8 - bracer; 9 - anode cells; 10 - input anolyte pipe; 11 - plug; 12 - input catholyte pipe; 13 - gathering catholyte collector; 14 - distribution channel of cathode chambers; 15, 16 - cathodes; 17 - anodes; 18 - parallelogram anode chambers; 19, 21 - openings of the anolyte gathering channel; 20, 22 - openings of the catholyte gathering chamber; 23 - distribution collector for catholyte flow; 24 - cathode chambers; 26 - plug; 27 - gathering anolyte channels; 28 - distribution channel of anode chambers.

The plant consists of anode cells 9 (sectional view G - G) with anode chambers 18 and cathode cells (sectional view B - B) with cathode chambers 24, with diaphragms 16 between them. All the electrodes - anodes 17 and cathodes 15, excluding the extreme ones, have two working surfaces. The shapes of the electrodes and diaphragms correspond to the parallelogram shape of the anode and cathode chambers, while the dimensions of their lateral sides are not less than 5 mm longer than corresponding sides of the parallelogram anode and cathode chambers. The plant is braced with the bracers 4, 6, 8 and pressing cells 3, where input anolyte pipes 10, input catolyte pipes 12, output anolyte pipes 5, output catholyte pipes 25 and plugs 11, 7, 11, 26 are located. Rubber or other sealing gaskets of the shape identical to that of the connected elements may be put between the cells and the diaphragm, the cell and the electrodes, so as in other places where the elements of the electrochemical plant are connected. Anode and cathode cells of the plant made of dielectric material have openings not united with the corresponding chambers for electrolytes' flow in the anode cells (sectional view Γ - Γ), for catholyte flow in the gathering collector 20 and catholyte flow in the distribution collector 23; and 19, 21 in the anode cells (sectional view B - B) for anolyte flow correspondingly. Electrolytes flow from the collectors to the chambers and back from the chambers to the collectors by the channels 22 (view A) in the shape of restricted space, where incomplete compression and expansion of the electrolyte is realized. One channel side is a straight line extending from the side wall of the chamber up to its intersection with gathering or distribution collector in the point where passes the collector radius R perpendicular to the wall. The other wall of the channel is a semicircle connecting the gathering or distribution collector with the second side wall of the chamber in the point of the semicircle intersection with the collector radius R parallel to the straight side of the channel The semicircle radius r and the gathering or distribution channel radius R are connected by ratio R > r > 0.

The electrochemical plant functions as the following. The initial solution flows through the input pipes 10 and 12 to the distribution channels of the anode chambers 28 and of the cathode chambers 14, wherefrom it goes through the channels 22 to the anode chambers 18 of anode cells (sectional view Γ - Γ) and to the cathode chambers 24 of the cathode cells 2 (sectional view B - B) respectively. The electrolytes fall into the chambers and due to the shape of the channels 22 are distributed uniformly in the chambers. After processing in the chambers the solutions and gases obtained by electrochemical processing go by channels 22 to the gathering channels of anolyte 22 and catholyte 13, formed by the openings 19 and 20 respectively. The products received at the electrochemical plant are removed from it by output pipes of anolyte 5 and catholyte 25, connected to the gathering channels of anolyte and catholyte correspondingly.

The declared electrochemical plant is used in the industry in the equipment of electrochemical gas production, so as for water preparing.

### REFERENCES CITED

1. A.P. Tomilov, Applied electrochemistry, Moscow, Khimiya, 1984, 214 p.
2. Inventor's certificate of the USSR, Nº 1724592, CO2 F1/46, 1989.
3. I.E. Apeltsin, V.A. Klyachko. Desalination of water, Moscow, Izdatelstvo literatury po stroitelstvu, 1968, 135 p.
4. V.N. Evreinov. Hydraulics, Leningrad - Moscow, Vodny Transport, 1939, 351 p.
5. R.R. Chuguev, Hydraulics. Ltningrad, Energoizdat, 1982, 383 p.

## Claims

1. An electrochemical plant with channels for collecting and distributing anolytes and catholytes wherein anode and cathode compartments are built in the shape of parallelograms and contain, in their upper and lower corners, canals which serve as connections to the collecting and distributing channels respectively, delivering the right-up-left flow to electrolytes in the anode compartments and the left-up-right flow to electrolytes in the cathode compartments, made in the form of a finite volume, partially compressing and expanding the electrolyte flow, since one side of the canal is a straight line, extending from the side wall of the compartment up to its intersection with the collecting or distributing channel at the point in which the channel radius R is perpendicular to the said side wall, while the other wall of the canal is made in the form of a semicircle, connecting the collecting or distributing channel with the second side wall of the compartment at the point of the semicircle intersection with the channel radius R, parallel to the straight side of the canal, the semicircle radius r being related to the collecting or distributing channel radius R by the relation R > r > 0.
